# EUROPEAN PATENT APPLICATION

(11) **EP 1 927 539 A2**
(43) Date of publication of application: **04.06.2008**
(21) Application number: 07120481.2
(22) Date of filing: 12.11.2007
(51) Int. Cl.: B62K 15/00

(54) **Foldable cycle**

(30) Priority: 01.12.2006 NL 1032975
(71) Applicant: Vissers, Herbert, 8239 DC Lelystad (NL); Vissers, Lennard, 5641 NK Eindhoven (NL)
(72) Inventor: Vissers, Herbert, 8239 DC Lelystad (NL); Vissers, Lennard, 5641 NK Eindhoven (NL)
(74) Representative: Klavers, Cornelis

(57) **Abstract**

A multifunctional cycle which is easy to fold, in particular a bicycle, a tricycle or a multicycle comprising at least one front wheel (2) and at least one rear wheel (3), at least one of which is steerable, a steering shaft (5) which is rotatable within a steering column (4), comprising a lower part (6) provided with two spaced-apart supports (7-1;7-2) mounted to the steering column (4), an upper frame tube (14-1) and a lower frame tube (14-2), which both extend from said at least one rear wheel (3) to the steering column (4) and which are each provided at the ends thereof with hinges (15-1;15-2) attached to the respective supports, which hinges (15-1;15-2) are rotatable in a direction transversely to the steering shaft (5), and a hinge (16) mounted in the lower frame tube (14-2).
The cycle is folded by lifting the upper frame tube (14-1) causing the rear wheel (3) to be moved towards the front wheel (2).

## Description

The present invention relates to a folding cycle, such as a bicycle, a tricycle or a multicycle.

Such a folding cycle is known from EP-1.090.832. The known cycle comprises two front wheels to be steered by means of an Ackerman-Pitman steering mechanism and a rear wheel to be moved to a position between the front wheels upon folding; a steering shaft being rotatable about its longitudinal axis in a steering column; a large number of frame tubes being movable relative to each other and being provided with corresponding pivot points. This makes it possible to convert the known cycle to the unfolded position of use or to a folded storage position.

A drawback of the known cycle is the large number of frame tubes being movable and pivotable relative to each other, which stands in the way of realising a smooth and quick fold-up and fold-out of the cycle.

The object of the present invention is to provide an improved cycle which can be more easily converted from the folded position to the unfolded position, and vice versa, and which is furthermore multifunctional in each of the aforesaid positions.

In order to accomplish that object, the folding cycle according to the invention possesses the features defined in claim 1.

The advantage of the cycle according to the invention is that only a small number of hinges are required for folding and unfolding the cycle, which hinges, unlike those used in the above-described prior art, need not be movable as well. The cycle according to the invention, which comprises fewer pivot points and sliding points, can thus be folded and unfolded more easily, with less force being required.
Mounting the hinges to the ends of the frame tubes, in combination with the provision of the hinge in the lower frame tube, leads to a folding cycle, which functions as a cycle, for example for invalids, in the unfolded position, but which, in the folded position thereof, in particular when configured as a tricycle or a multicycle, can also be advantageously and functionally used as a walking trolley, walker, perambulator, carrier cycle or transport trolley in its own right if the front side and/or the rear side are provided with luggage carriers or a basket or the like.
In folded position, balanced wheeling the cycle remains advantageously possible, since the rear wheel cannot be moved to a position between the front wheels upon being folded.

One embodiment of the cycle according to the invention is characterized in that the steering shaft is provided with a movable steering bracket mounted to the lower end thereof for operating a steering mechanism, and that the hinge mounted to the end of the lower frame tube is U-shaped, comprising ears that limit the movement of the steering bracket in the folded position of the cycle.
The advantage of this embodiment of the cycle is that the steering movements of the folded cycle are limited or blocked in a simple manner by means of the respective U-shaped hinge at the end of the lower frame tube.

A currently preferred embodiment of the cycle according to the invention is characterized in that a gas spring is provided between two parts into which the lower frame tube is divided by the hinge mounted therein.

A tension gas spring will automatically move the two parts together upon being released, as a result of which the folding operation will be automatically started and be continued until the desired end position of the front wheels and the rear wheels is reached.

Further embodiments of the cycle according to the invention as defined in the claims and the advantages thereof will be explained in more detail in the description below, in which reference is made to the following figures, in which corresponding parts are indicated by the same numerals. In the drawing:
Figure 1 is a perspective view of the cycle according to the invention in the unfolded position thereof;
Figure 2 is a perspective view of the cycle according to the invention in the folded position thereof;
Figure 3 is a detail view of the lower part of the steering shaft of the cycle in the unfolded position thereof; and
Figure 4 is a detail view of the lower part of the steering shaft of the cycle in the folded position thereof.

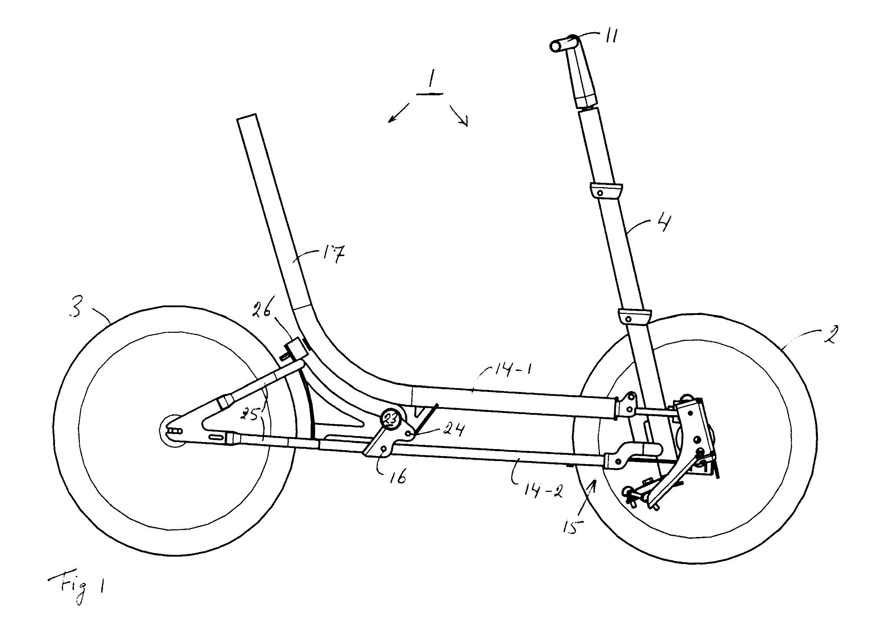

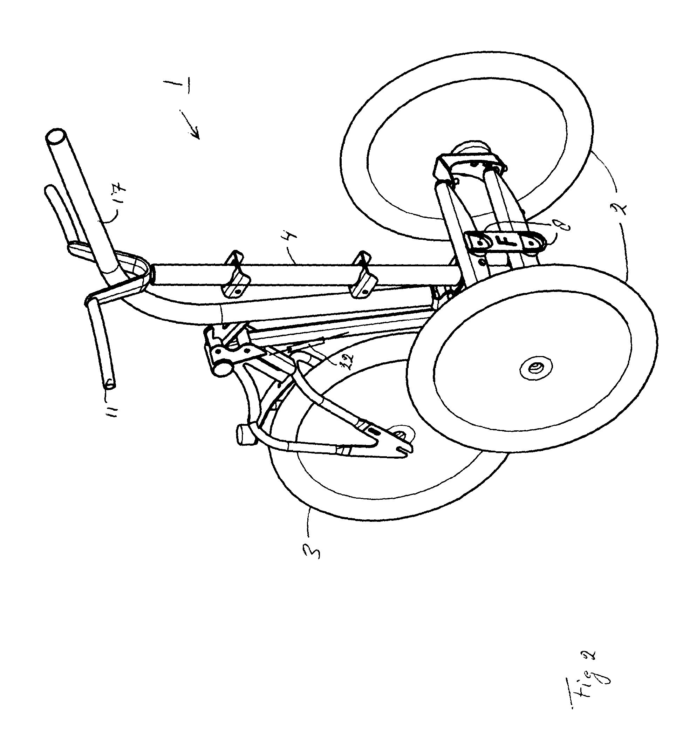

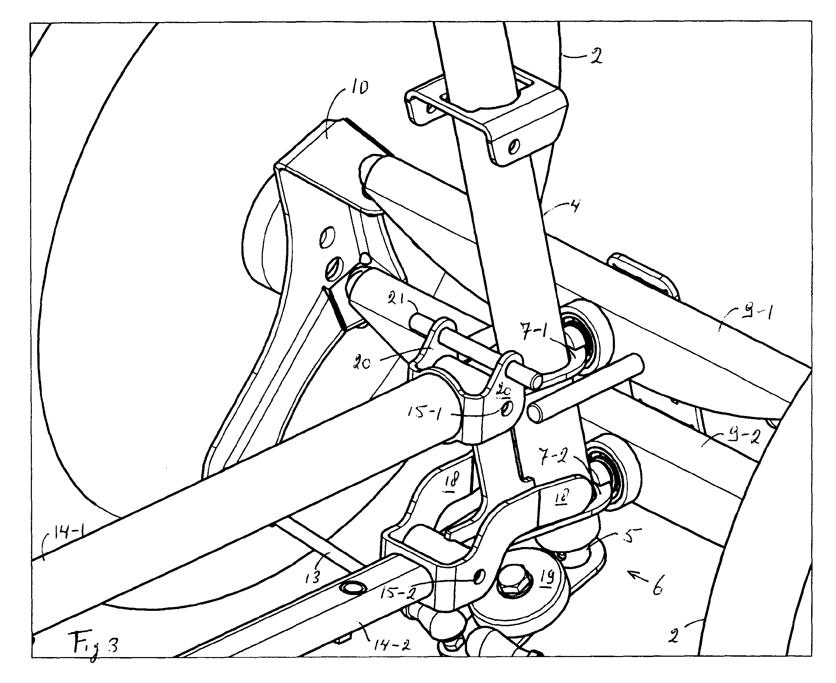

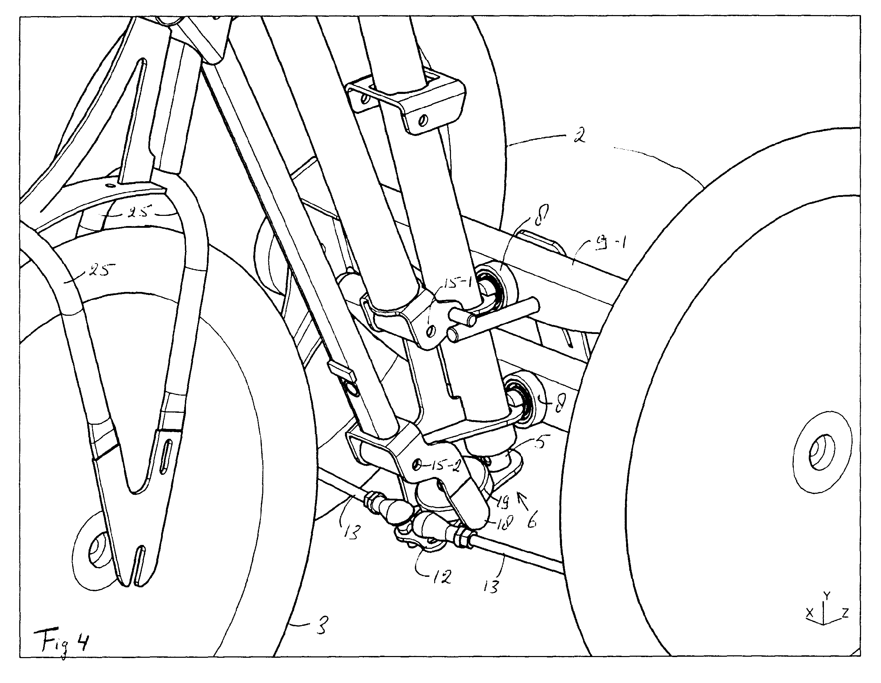

The respective figures 1 and 2 show a cycle 1 in the unfolded position and the folded position, respectively. The cycle 1 shown in the figures comprises two steerable front wheels 2 and one rear wheel 3. Two rear wheels may be provided, if desired, without departing from the present basic principle to be explained below. The cycle 1 may be a bicycle, a tricycle, a quadricycle, generally a multicycle, at least one of the front wheels 2 and/or rear wheels 3 or, more generally, pairs of wheels of which are steerable. The cycle 1 has a steering shaft 5 which is rotatable about its longitudinal axis in a steering column 4, which steering shaft has a lower part 6, which is shown in more detail in the unfolded position and in the folded position of the cycle in the respective figures 3 and 4.
Two supports 7 are mounted one above the other on the steering column 4. The two supports 7-1 and 7-2 are each provided with bearings 8 at the front side of the cycle 1 so as to enable lateral adjustment of two parallel steering arms 9. The steering arms 9 are rotatably connected to respective adjustable cross plates 10 at their respective ends via king pin connections as known per se, in which cross plates the steerable front wheels 2 are journalled. Upon angular displacement of a handlebar 11 that is fixed to the rotatable steering shaft 5, a steering bracket 12 connected to the shaft 5 at the lower part 6 is adjusted. Two steering rods being pivot-mounted in the steering bracket 12 and the two cross plates 10 transmit said angular displacement to the thus steerable front wheels 2 via the adjustable cross plates 10. The upper steering arm 9-1 of the steering arms is shorter than the lower steering arm 9-2, so that the two front wheels 2 and the steering column 4 will take up a slightly inclined position when taking a bend as a result of rotation at the bearings 8. This reduces the mechanical load to which the cycle 1 is subjected upon taking bends.
The cycle 1 further comprises an upper frame tube 14-1 and a lower frame tube 14-2, which both extend between the rear wheel 2 and the steering column 4. On the side of the steering column 4, the two frame tubes 14 are provided with respective hinges 15-1 and 15-2, the axes of rotation of which extend substantially parallel to the two steering rods 13; in other words, substantially transversely to the steering shaft 5. Herewith the hinge 15-1 is mounted on the upper support 7-1, and the hinge 15-2 is mounted on the lower support 7-2. Furthermore, a further hinge 16 (figure 1) is mounted in the lower frame tube 14-2, the axis of rotation of which further hinge extends substantially parallel to the axes of rotation of the hinges 15.
The cycle 1 is folded in a simple manner by lifting the upper frame tube 14-1 or, if said frame tube has been elongated to blend into a seat tube 17, by lifting the seat tube 17, causing the rear wheel to be moved towards the front wheels 2. A saddle or, if the cycle 1 is a reclining cycle, a seat bucket, is mounted on the seat tube 17.
The hinge 15-2 mounted to the end of the lower frame tube 14-2 is provided with ears or projections 18, so that the hinge is U-shaped, as it were, which ears 18 more or less limit the steering movement of the steering bracket 12 (see figure 4). A rotatable disc 19, for example made of plastic material, may be mounted to the steering bracket 12, which disc engages between the ears 18, thus smoothly realising a locking engagement, in any position of the steering shaft when the cycle 1 is being folded.
Furthermore, the end of the upper frame tube 14-1 is provided with the hinge 15-1 (figure 4), which, for uniform constructional reasons, may also be slightly U-shaped, whilst stop means, for example in the form of a cross pin 2, are provided between slightly raised projections 20 on the hinge, which stop means stop the folding movement when an extreme position is reached in that the pin 21 strikes against the support 7-1 and/or in that the pin 21 strikes against a projection on the upper steering arm 9-1 (figure 4). Said extreme position will be such that the area of the ground surface on which the wheels are supported in that position ensures a sufficient stability of the cycle 1 in the folded position shown in figure 2. The cycle can also be used in the folded position in that case for safely transporting goods, for example contained in load carriers (not shown). Such carriers may or may not be detachably mounted behind the seat tube 17, for example on a luggage carrier, and/or on the steering column 4, in a stable position between the front wheels 2, extending in front of the steering column.
Preferably, a normally retracting gas spring 22 (schematically shown in figure 2) is fitted between the two parts into which the lower frame tube 14-2 is divided by the further hinge 16 mounted therein. When the cycle 1 is slightly lifted, for example by the saddle, after the gas spring 22 has been released, the gas spring 22 will retract and the cycle 1 will thus automatically fold to the position in which the aforesaid stopping takes place.
The cycle furthermore comprises a crank axle support 23 mounted between the upper frame tube 14-1 and the lower frame tube 14-2, to which the hinge 16 mounted in the lower frame tube 14-2 is attached. The cycle 1 comprises a further hinge 24 mounted between the upper and lower frame tubes 14, in particular on the crank axle support 23, as shown in figure 1. As a result, folding will take place in a stable manner. The lower frame tube 14-2 is fixed to a double rear wheel fork construction 25, to which a support member 26 is attached for supporting the upper frame tube 14-1 or the seat tube 17 in the unfolded position of use of the cycle 1 so as to take up the weight of the person riding the cycle. To give the cycle additional rigidity, said double rear wheel fork construction 25 is rigidly connected to the crank axle support 23. When the crank axle support 23 is positioned further to the front, a reclining cycle, in particular a reclining multicycle, can thus be realised.

## Claims

1. A folding cycle, comprising:
at least one front wheel and at least one rear wheel, at least one of which is steerable, which at least one front wheel and at least one rear wheel can be moved toward each other upon folding the cycle;
- a steering shaft which is rotatable within a steering column, comprising a lower part provided with two spaced-apart supports mounted to the steering column;
- an upper frame tube and a lower frame tube, which both extend from said at least one rear wheel to the steering column and which are each provided at the ends thereof with hinges attached to the respective supports, which hinges are rotatable in a direction transversely to the steering shaft; and
- a hinge mounted in the lower frame tube.

2. A cycle according to claim 1, **characterized in that** the steering shaft is provided with a movable steering bracket mounted to the lower end thereof for operating a steering mechanism, and that the hinge mounted to the end of the lower frame tube is U-shaped, comprising ears that limit the movement of the steering bracket in the folded position of the cycle.

3. A cycle according to claim 2, **characterized in that** a rotatable disc is mounted to the steering bracket, which disc engages between the ears in any position of the steering shaft when the cycle is being folded.

4. A cycle according to any one of the claims 1-3, **characterized in that** the hinge attached to the end of the upper frame tube is U-shaped.

5. A cycle according to claim 4, **characterized in that** the hinge attached to the end of the upper frame tube is provided with stop means for stopping the folding movement of the cycle when an extreme folded position is reached.

6. A cycle according to any one of the claims 1-5, **characterized in that** a gas spring is provided between two parts into which the lower frame tube is divided by the hinge mounted therein.

7. A cycle according to any one of the claims 1-6, **characterized in that** he cycle furthermore comprises a crank axle support mounted between the upper frame tube and the lower frame tube, to which the hinge mounted in the lower frame tube is attached.

8. A cycle according to claim 7, **characterized in that** the cycle comprises a further hinge mounted between the upper and lower frame tubes.

9. A cycle according to claim 8, **characterized in that** said further hinge is mounted on the crank axle support.

10. A cycle according to any one of the claims 1-9, **characterized in that** the upper frame tube has been or can be elongated and blends into a tube for supporting the saddle.

11. A cycle according to any one of the claims 1-10, **characterized in that** the lower frame tube is fixed to a double rear wheel fork construction, to which a support member is attached for supporting the upper frame tube in the unfolded position

12. A cycle according to claim 11 at least referring to claim 7, **characterized in that** said double rear wheel fork construction is connected to said crank axle support.

13. A cycle according to any one of the claims 1-12, **characterized in that** the cycle comprises a seat tube and is provided with respective load carriers mounted behind the seat tube and/or in front of the steering column.
